(19) Europäisches Patentamt
European Patent Office
Office européen des brevets

(11) **EP 4 498 044 A1**

(12) **EUROPEAN PATENT APPLICATION**

(43) Date of publication:
**29.01.2025 Bulletin 2025/05**

(51) International Patent Classification (IPC):
***G01D 5/353*** *(2006.01)*

(21) Application number: **24187066.6**

(52) Cooperative Patent Classification (CPC):
**G01D 5/35306;** G01D 5/35312; G01D 5/35316

(22) Date of filing: **08.07.2024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.07.2023 EP 23188443**

(71) Applicant: **Kistler Holding AG
8408 Winterthur (CH)**

(72) Inventors:
• **Waller, Jack
  Abingdon, OX145TH (GB)**
• **Rossi, Filippo
  46100 Mantova (IT)**
• **Summers, Michael
  Harwell, OX11 0EL (GB)**
• **Statham, Kristopher
  Faringdon, SN7 7UF (GB)**

(54) **OPTICAL FIBER SYSTEM TO DETERMINE AT LEAST ONE PHYSICAL PARAMETERS AND METHOD TO DETERMINE AT LEAST ONE PHYSICAL PARAMETERS USING AN OPTICAL FIBER SYSTEM**

(57) The invention relates to a Sensor system (1); comprising at least one optical fiber (7), a modulable light source (4), and a photodetector (5); at least one optical fiber (7) comprises at least two sensing reflectors (1.1, 1.2 to 1.1); and at least one optical fiber (7) comprises at least one reference reflector (2); each of the at least one optical fiber (7) further comprising a distal end (72) and a proximal end (71); wherein a measuring segment (3.1 to 3.i) is formed in between two sensing reflectors (1.1 to 1.1); wherein the measuring segment (3.1 to 3.i) is arranged between the distal end (72) and the proximal end (71); wherein the light source (4) is arranged at the proximal end (71) of the optical fiber (7); wherein the light source (4) is configured to emit light with a coherence length longer than the maximum distance between any of the sensing reflectors (1.1, 1.2 to 1.1) and any of the at least one reference reflector (2); wherein the reference reflector (2) is disposed between the proximal end (71) and the distal end (72); and wherein the reference reflector is least 1 mm spaced apart from the distal end (72).

Fig. 2

EP 4 498 044 A1

**Description**

**Technical field**

The invention relates to an optical sensor system and a method to determine physical parameters using an optical sensor system.

**Background art**

Optical fibers are well-known in communication technology for transferring information in the form of light over long distances. However, optical fibers can also be used to probe physical parameters of the environment due to an influence of said parameters on the optical properties of the fiber. As a result, light emerging from the fiber is influenced by the physical parameters of the environment through which the fiber passes. A physical parameter is for example temperature, strain, magnetic field, electric field, etc.

A way to probe certain physical parameters is to introduce optical elements into the fiber, which are especially sensitive to said physical parameter. One well-known approach is Fiber Bragg Grating based Fiber Sensing, which usually refers to techniques that directly use the physical deformation of Bragg Gratings, short FBG, fabricated into the core of optical fiber. These gratings consist of a uniform series of partially reflective/refractive defects, spatially separated by a defined period ($\Lambda$). When reflected light is resonant with the grating structure, the reflected waves reinforce (constructive interference). The reflected wavelength $\lambda_B$, also known as Bragg wavelength, is defined as $\lambda_B = 2n_e \Lambda$, where $n_e$ is the refractive index of the fiber core. For non-ideal gratings of finite length, the Bragg wavelength is the center wavelength of a characteristic bandwidth. In general, the greater the number of grating elements, the higher the reflectivity of the grating and the narrower the bandwidth of reflected wavelengths. When the FBG deforms due to strain, the Bragg wavelength of the grating shifts. The shift occurs towards red if the grating is stretched or towards blue if the grating is compressed. In a typical FBG sensor system, each grating in a fiber sensor has a different Bragg wavelength, allowing them to be easily distinguished spectroscopically, usually using a diffraction grating and linear array detector or a wavelength-modulated optical source and single detector. With adequately narrow bandwidths, many sensors can be tracked within a single fiber (Wavelength Division Multiplexing, WDM). However, there is usually a tradeoff whereby the higher reflectivity of the gratings required to achieve sufficiently narrow bandwidths and attenuation of the light passing through the fiber, reducing the signal to noise ratio.

Another completely different method to determine physical properties of an environment using optical fiber and reflectors is Fiber Segment Interferometry, short FSI. FSI is a Range Resolved Interferometry technique originally developed by Cranfield University in the UK and disclosed in GB2568305A1 and GB2571575A1. FSI and other fiber techniques are described in detail in "Range-resolved optical interferometric signal processing", Kissinger, Thomas (thesis, Cranfield University).

An optical fiber sensor based on FSI technology can be used to measure very small, i.e. parts-per-billion, changes in the length of objects. It can do this by exploiting Range Resolved Interferometry peak-tracking algorithms, as disclosed in the above mentioned state of the art and in Thomas Kissinger, Ricardo Correia, Thomas O. H. Charrett, Stephen W. James, and Ralph P. Tatam, "Fiber Segment Interferometry for Dynamic Strain Measurements," J. Lightwave Technol. 34, 4620-4626 (2016).

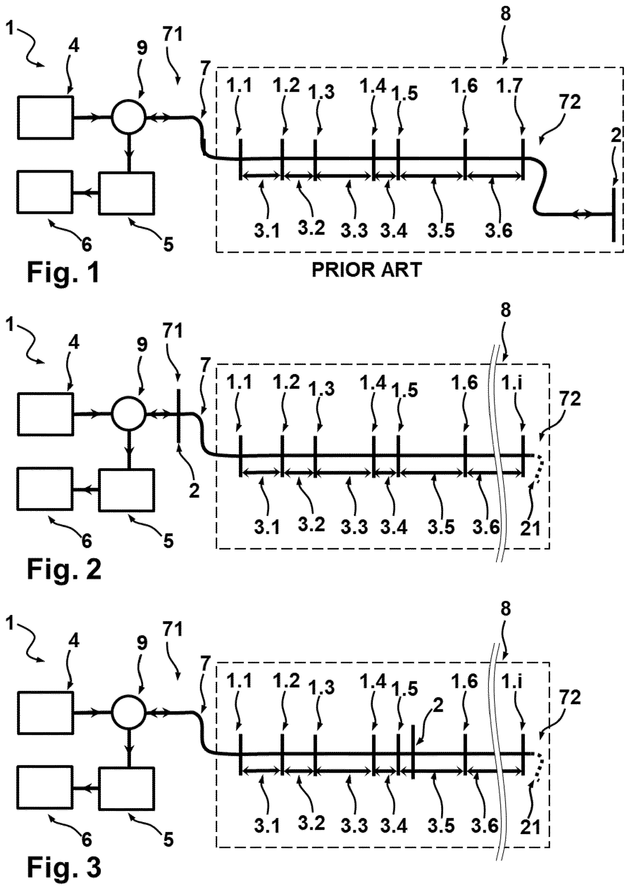

FSI is a measurement technique that employs a coherent light source, for example a laser. The light is guided through an optical fiber. The light is modulated in wavelength at the desired modulation frequency, for example up to 200 kHz. The modulated light is preferably launched into an optical fiber via a coupling device, for example a 3-port optical circulator. Light reflects from the optical fiber and returns through the coupling device to a photodetector, as shown in prior art Fig. 1. Of course, a person known to the arts could implement other means to launch the light into the optical fiber and to guide reflected light from the optical fiber to the photodetector, such as an arrangement of fiber couplers and/or splitters.

The optical sensor system comprises a fiber, a reference reflector at a distal end of the fiber and multiple sensing reflectors arranged along the length of the fiber between the distal end and a proximal end of the fiber. The sensing reflectors together with the reference reflectors form a series of Fabry-Pérot optical cavities, also known as Fabry-Pérot (F-P) or resonators. The distance from the reference reflector to each individual sensing reflector is unique, resulting in each resonator exhibiting different resonant wavelengths.

The in-fiber reflectors may be created by fabricating localized periodic variations in refractive index within the core of the optical fiber. The variations in refractive index result in light being reflected according to the resulting Fresnel coefficients. If the period of the structure is half the wavelength of the light passing through it, the reflected waves are in-phase or resonant and satisfy the Bragg condition. When illuminated by a light source, these Fiber Bragg Gratings create a reflected light wave with a reflection profile as a function of wavelength and bandwidth, characteristic dependent on the design parameters of the grating, such as number of periods, refractive index contrast, apodization function, chirp, etc.

Of course, other reflecting elements may also be used as sensing reflectors.

Therefore, the modulated light at the desired modulation frequency launched into a fiber is influenced by the reflection profile of the reference reflector and sensing reflector, wherein the length between both reflectors is influenced by a physical parameter. In case of a fiber Bragg grating sensing reflector, the period of the fiber Bragg grating depends on the coefficient of thermal expansion and temperature, or on physical strain exerted in the fiber Bragg grating. Light reflects from the optical fiber and returns through the coupling device to a photodetector, as shown in prior art Fig. 1. The detected signal is digitized, for example at 200 MHz, providing approximately 1000 samples per measurement/modulation cycle

Tracking the relative phase of resonances in time, from modulation cycle to modulation cycle, provides the relative distances multiplied by the refractive index of the fiber, also known as optical path length, between each sensing reflector and the reference reflector. In the following, a distance is always an optical distance. The separation between each adjacent pair of sensing reflectors, called a measuring segment is then known. Cross-interferences between sensing reflectors are relatively weaker than interferences with a reference reflector due to the relatively higher reflectivity of the reference reflector.

The optical path length of each measuring segment changes due to strain. This is determined by the difference of pathlength between a first sensing reflector of the measuring segment to reference reflector and a second sensing reflector of the measuring segment to the reference reflector. Therefore, the optical fiber can be used in strain measuring applications when the optical fiber is firmly attached to another element and this element is subjected to strain. The optical path length of each segment may also change as a function of temperature, due to both the thermo-optic coefficient (temperature-dependent change in refractive index) and the thermal expansion of the fiber. For this, the fiber is usually placed inside a suitable smooth-bored sheath material, like polymer tubing or a glass capillary, that allows the optical fiber to expand freely with temperature. Of course, as measuring segments are specified along the length of the fiber, only measuring segments used for temperature measurement have to be placed in such sheath material. Temperature measurement may also be used if the fiber is securely attached to another material and thus is subject to strain induced by the thermal expansion of the other material and changes in the thermos-optic coefficient. Of course, pressure may also be measured using the optical fiber if the fiber is bonded to a flexible membrane, causing strain on the fiber upon pressure-induced bending of the membrane.

As the wavelength of the incident light is modulated, the reflected light signal forms a time-resolved interferogram containing characteristic resonant peaks in amplitude, corresponding to the length of each Fabry-Pérot resonator. A Fabry-Pérot resonator consists of the reference reflector and a respective sensing reflector.

The reference reflector according to the known state of the art is carried out as a cleave at the distal end of the fiber, as disclosed in Thomas Kissinger, Ricardo Correia, Thomas O. H. Charrett, Stephen W. James, and Ralph P. Tatam, "Fiber Segment Interferometry for Dynamic Strain Measurements," J. Lightwave Technol. 34, 4620-4626 (2016). Mechanical cleaving of the end of the optical fiber generates a glass to air interface. Such an interface has a Fresnel reflections of approximately 3.5%.

However, the above disclosed reflector is very susceptible to contamination. Moreover, the maximum reflectivity of the reference reflector is limited by Fresnel reflection, unless an additional expensive coating is applied to the cleaved surface. Even with coating, the reference reflector may still be vulnerable to contamination or mechanical damage.

The cleave also adds additional length to the end of the optical fiber sensor that is not useful to the measurement. Especially in applications with limited space, a reference reflector at the distal end of the fiber can result in a dead-space. The dead-space is a part of the fiber which is needed due to the reference reflector but itself provides no temperature or strain data. The fiber is therefore very long without added value. The additional fiber length containing the reference reflector has to be accommodated in the object under test.

In addition, contamination of the cleaved reference reflector according to the state of the art with a fluid medium other than air has the disadvantage that the Fresnel reflection at the interface is influenced and the reflectivity of the reference reflector changes. In the case of particulate contamination, scattering losses reduce the signal-to-noise of the measurement.

It is an object of the invention to reduce the above mentioned disadvantages. It is a further object to the invention to create a more compact optical fiber.

## Summary of the invention

At least one of the tasks is solved by the features of the independent claims.

The inventive sensor system comprises at least one optical fiber, a modulable light source, and a photodetector. At least one optical fiber comprises at least two sensing reflectors. At least one optical fiber comprises at least one reference reflector. Each of the at least one optical fibers further comprise a distal end and a proximal end. A measuring segment is formed in-between two sensing reflectors. The measuring segment is arranged between the distal end and the proximal end. The light source is arranged at the proximal end of the optical fiber. The light source is configured to emit light with a coherence length longer than the maximum distance between any of the sensing reflectors and the closest of the at least one reference reflectors. Otherwise, the reference reflector and sensing reflector would not be usable as a Fabry-Pérot resonator. Of course, in the case of incorporating more than one reference reflector, the coherence length only has to be longer than the maximum optical distance between any of the sensing reflectors and the one reference reflector they are referenced with. In general, each sensing reflector is referenced by the reference reflector closest to it in terms of optical distance.

In the following, a distance is always an optical distance.

It is obvious that also the segment formed between a reference reflector a sensing reflector may be influenced by a physical parameter and may therefore also be used to obtain information on the physical parameter. In addition, in case of more than one reference reflectors, a segment between wo reference reflectors may also be influenced by a physical parameter and may therefore also be used to obtain information on the physical parameter. The term "measurement segment" is therefore not meant to restrict measurement capabilities to only cross-interferences of reference reflector and the two involved sensing reflectors but only illustrate the most used segments for measuring a physical parameter.

According to the invention the reference reflector is disposed between the proximal end and the distal end. The reference reflector is least 1 mm spaced apart from the distal end. Replacing the cleaved reference reflector according to the state of the art with a reference reflector disposed inside spaced apart about 1 mm (millimeter) from the distal end of the fiber removes the risk of contamination or mechanical damage of the reference reflector. This has the advantage that the inventive optical fiber based sensor is more robust. In addition, the inventive optical fiber based sensor can easily be encapsulated and/or submerged in a fluid medium.

It should be noted that an optical system may have more than one reference reflector. In this case, the more than one reference reflectors may have a higher and/or a lower reflectivity than any of the sensing reflectors.

In a preferred embodiment, the reference reflector is disposed between the proximal end and the sensing reflector closest to the distal end. The optical fiber then also has the advantage of a reduced dead space at the distal end of the optical fiber.

Preferably, the reference reflector is disposed between the proximal end and the sensing reflector closest to the proximal end. This is advantageous in comparison to the reference reflector being at the proximal end or in any location between the sensing reflectors, as in the event of damage to the sensor, the sensor will continue to work up the point of the damage if the reference reflector is located closer to the proximal end than the damaged location of the sensor.

In a preferred embodiment of the optical fiber, the reference reflector is a fiber Bragg grating. This has the advantage that the reference reflector can be located at the proximal end of the fiber, outside the active sensing region. The reference reflector may even be arranged inside an enclosure or the interrogator instrumentation comprising the light source and the photodetector. The reference reflector is therefore protected from of contamination or mechanical damage. In addition, the production quality of the optical fiber is higher and more reproducible because a fiber Bragg grating is produced in a more controlled way compared to a cleave.

In an aspect of the invention an attenuator is arranged at the distal end of the optical fiber. This is advantageous, as unwanted reflection from the end of the fiber, for example the original cleave, are suppressed. The attenuator may be configured to disperse light at the distal end of the fiber.

It is preferred that the reference reflector has a higher reflectivity that any of the sensing reflectors. Cross-interferences between sensing reflectors are therefore relatively weaker than interferences with a reference reflector due to the relatively higher reflectivity of the reference reflector. However, it is also possible to have the reference reflector with a lower reflectivity than any of the sensing reflectors to distinguish cross-interferences between sensing reflectors and a reference reflector. In this case, cross-interferences between a reference reflector and a sensing reflector are relatively weaker than interferences between sensing reflectors due to the relatively lower reflectivity of the reference reflector.

It should be noted that the denomination of reference reflector and sensing reflector is referring only to the designated use of the respective reflector. In general, the reflectivity of any reference reflector 2 is different from the reflectivity of any sensing reflectors 1.i to meet the boundary condition that the cross-interference is distinguishable in intensity from cross-interferences coming from any pair of sensing reflectors 1.i and that distances between any sensing reflector 1.1 to 1.i and the respective reference reflector 2 are unique.

Further advantages and aspects of the invention are disclosed in the embodiments.

**Brief description of the drawings**

The drawings used to explain the embodiments are schematic representations and show:

Fig. 1 A schematic sketch of a prior art embodiment of a sensor system,

Fig. 2 a schematic sketch of an embodiment of a sensor system,

Fig. 3 a schematic sketch of another embodiment of a sensor system,

Fig. 4 a schematic sketch of another embodiment of a sensor system,

Fig. 5 a schematic sketch of another embodiment of a sensor system,

Fig. 6      a schematic sketch of another embodiment of a sensor system,

Fig. 7      a schematic sketch of another embodiment of a sensor system, and

Fig. 8      a schematic sketch of another embodiment of a sensor system.

**Preferred Embodiments**

Fig. 1 shows a prior art of a sensor system 1. The at least one optical fiber 7 is shown attached with a proximal end 71 to the modulable light source 4. The light source 4 is preferably modulable in wavelength. The light source is configured to emit light to a coupling device 9, for example a 3-port optical circulator 9. The coupling device is configured to transfer light emitted from the light source into the fiber 7 and to transfer reflected light from fiber 7 to the photodetector 5. The optical fiber 7 comprises sensing reflectors 1.1 to 1.1, wherein i>1, $i \in \mathbb{N}$. The reference reflector 2 is arranged at the distal end 72 of the fiber 7

The optical fiber 7 comprises measuring segments 3.1 to 3.i, wherein i>1, $i \in \mathbb{N}$. The measuring segments 3.1 to 3.1 are arranged between the distal end 72 and the proximal end 71, wherein each measuring segment 3.1 to 3.i is formed in between two sensing reflectors 1.1 to 1.i. The light source 4 is configured to emit light with a coherence length longer than the maximum distance between any of the sensing reflectors 1.1 to 1.i and the reference reflector 2. In the exemplary embodiment of the state of the art, the maximum distance is shown in between sensing reflector 1.1 and reference reflector 2. The measuring segments 3.1 to 3.i are arranged in a sensing region 8. The sensing region 8 is a region where a physical parameter, for example temperature or strain, that causes a change of the optical properties of a measuring region 3.1 to 3.i that can be determined. To determine the physical parameter in sensing region 3.n, nCi, reflections from a Fabry-Pérot resonator comprised of sensing reflector 3.n, nEi and reference reflector 2 as a function of modulated wavelength are determined and reflections from a Fabry-Pérot resonator comprised of sensing reflector 3.n+1, nEi and reference reflector 2 as a function of modulated wavelength are determined.

Fig. 2 shows an embodiment of a sensor system 1 according to the invention. Elements having the same functions as in the state of the art described in Figs. 1 are designated by the same reference numbers.

In the embodiment of the sensor system 1 according to the invention shown in Fig. 2, the reference reflector 2 is disposed between the proximal end 71 and the sensing reflector 1.1 closest to the proximal end 71.

This arrangement of the reference reflector 2 is therefore completely differing from prior art.

Fig. 3 shows an embodiment of a sensor system 1 according to the invention. Elements having the same functions as in the state of the art described in Figs. 1 are designated by the same reference numbers.

In the embodiment of the sensor system 1 according to the invention shown in Fig. 3, the reference reflector 2 is disposed between the proximal end 71 and the sensing reflector 1.1 closest to the distal end 72. In this embodiment, the reference reflector 2 is arranged in between sensing reflector 1.5 and sensing reflector 1.6, but could easily also be arranged between sensing reflector 1.6 and sensing reflector 1.i or elsewhere between sensing reflector 1.i and the coupling device 9.

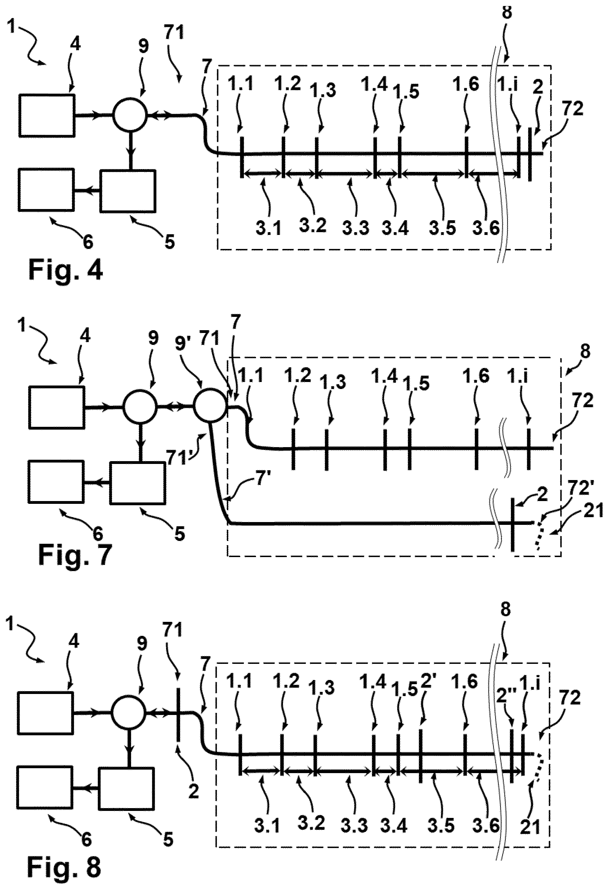

Fig. 4 shows an embodiment of a sensor system 1 according to the invention. Elements having the same functions as in the state of the art described in Figs. 1 are designated by the same reference numbers.

In the embodiment of the sensor system 1 shown in Fig. 4, the reference reflector 2 is disposed between the proximal end 71 and the distal end 72. The reference reflector 2 is spaced at least 1 mm apart from the distal end 72. In this embodiment, the reference reflector 2 is arranged in-between sensing reflector 1.i and the distal end 72 and spaced apart from the distal end by about 1 mm. The optional attenuator 21 is not shown for the sake of clarity.

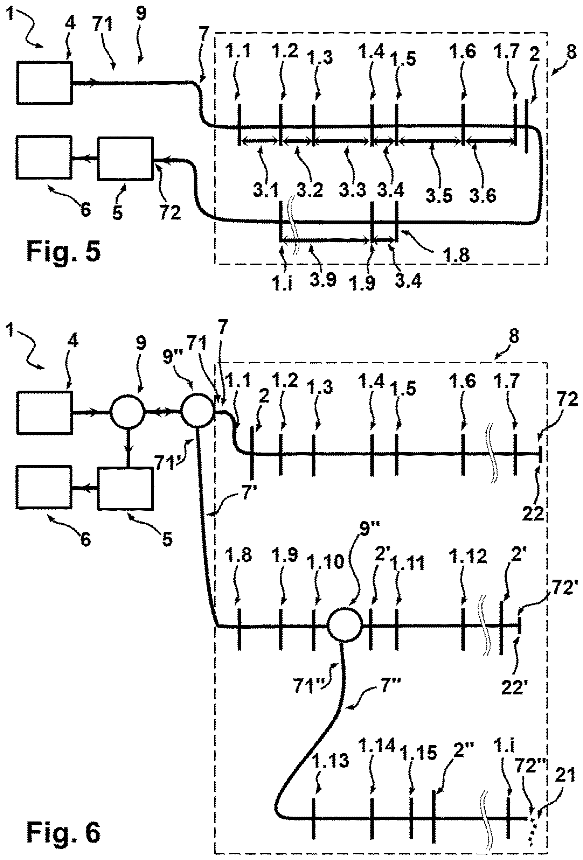

Fig. 5 shows an embodiment of a sensor system 1 according to the invention. Elements having the same functions as in the state of the art described in Figs. 1 are designated by the same reference numbers.

In the embodiment of the sensor system 1 shown in Fig. 5, the reference reflector 2 is disposed between the proximal end 71 and the distal end 72, but could also be placed at any position according to the embodiments shown in Fig. 1 to 4. In this embodiment, the photodetector 5 is placed at the distal end 72. The photodetector 5 may be directly coupled to the distal end 72, for example by splicing. The photodetector 5 may also be arranged spaced apart from the distal end 72 by an air gap. In the latter case, it might be beneficial to cover the distal end with an anti-reflection coating known to a person knowledgeable in the arts.

Fig. 6 shows an embodiment of a sensor system 1 according to the invention. Elements having the same functions as in the state of the art described in Figs. 1 are designated by the same reference numbers.

In the embodiment of the sensor system 1 according to the invention shown in Fig. 6, as an example three fibers 7,7',7'' are shown. The fibers are coupled by a coupling device 9',9''. In this example, coupling devices 9',9'' may be 3-port circulators. Reflected light introduced in the first fiber 7 is guided into the second fiber 7'. Reflected light from the second fiber upstream of coupling device 9'' is guided into third fiber 7''. Reflected light from the third fiber 7''' is guided back to the photodetector 5 via all coupling devices 9,9',9''. Preferably but not necessarily, first fiber 7 and second fiber 7' are fitted with a highly reflective coating 22,22' or a mirror 22,22' at the respective distal ends 72, 72' to ensure a high intensity of the light introduced in all fibers 7,7',7''. The third fiber 7'' is preferably fitted with an attenuator 21 at the distal end to prevent light not reflected by any of the reference reflectors 2,2',2'' or sensing reflectors 1.1 to 1.i to reach the photodetector. In this embodiment of a sensor system 1 the fibers are arranged in a kind of "daisy chain" arrangement. The embodiment also shows three reference reflectors 2,2',2'', each disposed in a position of one of the three fibers. This way, it is possible to extend the total optical length of the fiber to be longer than the coherence length of the light source 4. It should be understood that also a different number of fibers 7 may be used, for example two fibers 7 or more than three fibers 7. In addition, a different number of reference reflectors 2 may be used. Or the reference reflectors 2 and/or photodetector 5 may be arranged differently inside the respective fibers 7 in analogy with embodiments shown in Fig. 2 to Fig. 5.

Fig. 7 shows an embodiment of a sensor system 1 according to the invention. Elements having the same functions as in the state of the art described in Fig. 1 are designated by the same reference numbers.

In the embodiment of the sensor system 1 according to the invention shown in Fig. 7, as an example two fibers 7,7' are shown. The fibers are coupled by a coupling device 9'. In this example, coupling device 9' may be a 3-port circulator or a beam splitter. In case of a beam splitter 9', incoming light is introduced in the first fiber 7 and second fiber 7' simultaneously. While sensing reflectors 1.1 to 1.i are arranged in the first fiber 7', one reference reflector 2 is arranged in the second fiber. Reflected light from the reference reflector 2 and reflected light from the sensing reflectors 1.1 to 1.i is guided back to the photodetector. The cross-interference is obtained the same way as explained for the single fiber 7 embodiment in the state of the art. Of course, coupling device 9' may also be chosen as a 3-port optical circulator, in which case the two fibers 7,7' are again daisy chained as explained for the embodiment of Fig. 6 already. It should be understood that also a different number of fibers 7 may be used, for example two fibers 7 or more than three fibers 7. In addition, a different number of reference reflectors 2 may be used. Or the reference reflectors 2 and/or photodetector 5 may be arranged differently inside the respective fibers 7 in analogy with embodiments shown in Fig. 2 to Fig. 5. A person knowledgeable in the arts will understand that a combination of embodiments from Fig. 5 and from Fig. 6 is also possible. Sensing reflectors 1.1 to 1.i and at least one reference reflector 2 may be distributed among the number of fibers 7, as long as the boundary conditions are met such that distances between any sensing reflector 1.1 to 1.i and the respective reference reflector 2 are unique, as explained for the state of the art already.

Fig. 8 shows an embodiment of a sensor system 1 according to the invention. Elements having the same functions as in the state of the art described in Figs. 1 are designated by the same reference numbers.

In the embodiment of the sensor system 1 according to the invention shown in Fig. 8, again one fiber 7 is shown. The fiber 7 comprises exemplarily a total of three reference reflectors 2,2',2''. This way, it is possible to extend the total optical length of the fiber 7 to be longer than the coherence length of the light source 4, as long as the distance between any of the sensing reflectors 1.1 to 1.i to its closest reference reflector 2,2',2'' does not exceed the coherence length of the light source. It should be understood that also a different number of fibers 7 may be used, as shown in the embodiments of Fig. 6 or Fig. 7, each fiber 7,7',7'' having more than one reference reflector 2.

In the following, different aspects of the invention are described which are all compatible with all embodiments shown in the figures and described above unless explicitly stated otherwise.

In an aspect of the sensor system 1, the reference reflector 2 is a fiber Bragg grating. This has the advantage that the reference reflector 2 can be located at the proximal end 71 of the fiber 7, away from the active sensing region 8. The reference reflector may even be arranged inside an enclosure or the interrogator instrumentation comprising the light source 4 and the photodetector 5. The reference reflector 2 is therefore protected from contamination or mechanical damage. In addition, the production quality of the optical fiber 7 is higher and more reproducible because a fiber Bragg grating is produced in a more controlled way compared to a cleave.

In an aspect of the sensor system 1 an attenuator 21 is arranged at the distal end 72 of the fiber 7. This is advantageous, as unwanted reflections from the distal end 72 of the fiber are suppressed. The attenuator 21 may be configured to disperse light at the distal end 72 of the fiber. While advantageous, it is not essential to the invention to have an attenuator arranged at the distal end of the fiber. This aspect is not compatible with the embodiment having the photodetector 5 arranged at the distal end 72 shown in Fig. 5. Alternatively, the reflectivity of the reference reflector 2 according to the invention may be chosen differently from a potential reflection coming from the distal end 72 to distinguish between interferences of the inventive reference reflector 2 and a sensing reflector 1.i and interferences of the potential reflections from the distal end 72 and a sensing reflector 1.i. Contamination of the distal end would not change the reference, as a reflection from the distal end is not used for measurement.

Preferably, the reference reflector 2 has a higher reflectivity than any of the sensing reflectors 1.i. Cross-interferences between sensing reflectors 1.i are therefore relatively weaker than cross-interferences with a reference reflector 2 due to the relatively higher reflectivity of the reference reflector 2. However, it is also possible to have the reference reflector 2 with a lower reflectivity than any of the sensing reflectors 1.i to distinguish cross-interferences between sensing reflectors 1.i and a reference reflector 2. In this case, cross-interferences between a reference reflector 2 and a sensing reflector 1.i are relatively weaker than interferences between sensing reflectors 1.i due to the relatively lower reflectivity of the reference reflector 2.

In another aspect of the sensor system 1 the measuring segments 3.1 to 3.i are arranged in a sensing region 8. The measuring segments are 3.1 to 3.i configured to change their properties depending on a physical property within the sensing region 8, for example temperature, pressure, or strain. The attenuator 21 is arranged in the sensing region 8. This has the advantage that the fiber 7 is shorter than a comparable state of the art fiber 7. No additional dead space at the distal end needs to be accounted for in the sensing region 8.

According to another aspect of a sensor system 1 the attenuator 21 is formed from a coreless fiber. This is advantageously cost effective, as splicing a coreless fiber to the distal end 72 is easily achievable. Splicing is the process of connecting two optical fiber elements. A coreless fiber is for example a glass rod.

According to another aspect of a sensor system 1 the attenuator 21 is configured to attenuate incident light by at least -0.1 dB/mm, preferably more than -2 dB/mm; or that the attenuator 21 has a length of no more than 100 mm, preferably no more than 20 mm. This is advantageous, as unwanted potential reflections from the distal end 72 are effectively suppressed with only a short excess length of the fiber. Possible embodiments of such an absorber for attenuating/suppressing back-reflections include: absorber, optical isolator or crossed polarizers, index matching material, diffuser/scatterer, anti-reflection (dielectric) coating, fiber taper, melting and/or shaping the end of the fiber, or multimode fiber.

According to another aspect of a sensor system 1 the sensing reflectors 1.1 to 1.i are Fiber Bragg gratings. This is advantageous, as the same production technique can be used to introduce sensing reflectors 1.1 to 1.i and reference reflector 2 to the fiber. This allows efficient production of the fiber.

According to another aspect of a sensor system 1, the bandwidth of the sensing reflectors 1.1, 1.i is ideally 40 nm at about 1550 nm center wavelength. However, the invention also is feasible with a very wide range of bandwidths as long as the bandwidth of the sensing reflector 1.1, 1.i is wider that the modulable bandwidth of the light source 4, i.e. at least larger than 3 pm as stated in the following regarding the difference between start wavelength and end wavelength of the light source 4. In general, the bandwidth of the sensing reflector 1.1, 1.i is usually not smaller 1 nm. This is advantageous, as bandwidth of the modulation of the light up to the bandwidth of the reflectors may be used. A higher modulation bandwidth however increases the precision of the sensor system 1, as more wavelength dependent interferences can be determined, depending on the physical properties on a measuring region 3.i.

Of course, other center wavelengths can also be used. Wavelengths approximately between 1290 nm and 1620 nm are a good choice, as suitable light sources are available at relatively low cost. In addition, optical fibers are usually optimized to have the lowest attenuation at these wavelengths.

According to another aspect of a sensor system 1, the light source 4 is configured to emit light having a linewidth less than 10 GHz, preferred less than 2 MHz. The coherence length of the light source increases with the inverse bandwidth, allowing longer distances between reference reflector 2 and the most distal sensing reflector 1.i. The linewidth of the light source 4 depends on the application in which the sensor system 1 is used. For instance, 1 MHz would equate to a coherence length of approximately 200 m, which is suited for sensor systems 1 used in bridges or tunnels. 10 GHz would yield a coherence length of about ~20 mm, i.e. applications in limited or small spaces.

According to another aspect of a sensor system 1, the light source 4 is configured to emit light modulated at a modulation rate; and that the light source 4 is configured to sweep from a start wavelength to an end wavelength during the reciprocal modulation rate; and that the start wavelength differs at least 3 pm (picometer) from the end wavelength. The difference between start wavelength and end wavelength is dependent on the required measurement resolution. A resolution of 10 mm can be achieved with 300 pm modulation depth. For large structures only requiring 1 m resolution, 3 pm are sufficient.

According to another aspect of a sensor system 1, the reflectivity of the reference reflector 2 is at least twice as high as the reflectivity of any sensing reflector 1.1,1.2 to 1.i. This has the advantage that wavelength dependent optical interferences between the reference reflector 2 and any of the sensing reflectors 1.i can be easily distinguished from wavelength dependent interferences between any two sensing reflectors 1.i, 1.j, i, j>1, i≠j $i \in \mathbb{N}$.

Preferred, the reflectivity of the reference reflector 2 is at least five times the reflectivity of any sensing reflector 1.1 to 1.i. This may be easily achieved by using a fiber Bragg grating as reference reflector 2 and by using fiber Bragg gratings as sensing reflectors. The reflectivity of a fiber Bragg grating can be easily adjusted by the form and shape of the grating. It has been recognized that a factor of five is advantageous to easily distinguish between interferences between the reference reflector 2 with any of the sensing reflectors 1.i and interferences between any two sensing reflectors 1.i, 1.j, i, j>1, i≠j $i \in \mathbb{N}$.

In another aspect of the invention, the reflectivity of the reference reflector 2 is at least half, preferred one-fifth, the reflectivity of any sensing reflector 1.1,1.2 to 1.i. It has been recognized that also a reference reflector 2 having a lower reflectivity has the advantage that wavelength dependent optical interferences between the reference reflector 2 and any of the sensing reflectors 1.i can be easily distinguished from wavelength dependent interferences between any two sensing reflectors 1.i, 1.j, i, j>1, i≠j $i \in \mathbb{N}$.

In another embodiment, the reflectivity of any reference reflector 2 is different from the reflectivity of any sensing reflectors 1.i, as long as the cross-interference is distinguishable in intensity from cross-interferences coming from any pair of sensing reflectors 1.i.

It should be noted that the denomination of reference reflector 2,2',2'' and sensing reflector 1.i is referring only to the designated use of the respective reflector. Therefore, in an embodiment with several reflectors having different reflectivity, the reflector with the highest reflectivity may be chosen as reference reflector 2 while all other reflectors are sensing reflectors, as long as boundary conditions for coherence length, distinguishable cross-interference and unique length between reference reflector 2 and sensing reflectors 1.i mentioned above are met. Or the reflector with the lowest reflectivity may be chosen as reference reflector 2. Or several reflectors, having highest or lowest reflectivity may be chosen as reference reflectors 2,2',2'', wherein also a combination of highest and lowest reflectivity may be chosen. Or, a reflector with an intermediate reflectivity may be chosen as reference reflector 2, as long as the cross-interference of a sensing reflector 1.i with the reference reflector is distinguishable in intensity from cross-interferences coming from any pair of sensing reflectors 1.i.

According to another aspect of a sensor system 1, the sensor system 1 comprises an evaluation unit 6. The evaluation unit 6 is configured to track the relative phase of resonances in time upon modulation of the light of the light source 4. This is advantageous with respect to typical FBG based sensors, as for the FSI based sensing method, tracking only the change in phase of each interference peak relative to the reference reflector is necessary.

According to another aspect of a sensor system 1, the modulation rate of the light source 4 is at least 10 Hz, preferably at least 200 kHz. This allows for rapid data acquisition as only the change in phase of each interference peak relative to the reference reflector needs to be determined. This can be achieved with a state of the art FPGA (Field Programmable Gate Array). No complex detector array is necessary. This way, also high frequency vibrations or acoustic signals can be determined in the measuring zone, exerting a high frequency strain on the fiber 7.

According to another aspect of a sensor system 1, the light source 4 is a Distributed Feedback diode.

According to another aspect of a sensor system 1, the photodetector 5 comprises exactly one single photosensitive element. Distributed Feedback diode lasers are relatively inexpensive and robust. The FSI based sensor system does not require costly external-cavity lasers.

An optical sensing method to determine a physical property like temperature or strain in a sensing region 8 comprises the steps of providing at least an optical fiber 7 comprising at least two sensing reflectors 1.1,1.2 and at least a reference reflector 2; furthermore providing a light source 4 having a modulable wavelength; and providing a photodetector 5. The light source 4 emits light into a proximal end 71 of the fiber 7; wherein the wavelength of the light is modulated over a wavelength bandwidth as a function of time, wherein the light is reflected by at least two sensing reflectors 1.1,1.2 to 1.i forming a measuring segment 3.1 to 3.i of the optical fiber 7, by which sensing reflectors 1.1,1.2 to 1.i are arranged between the distal end 72 and the proximal end 71 of the fiber 7; wherein the light is also reflected at a reference reflector 2 arranged between the proximal end 71 and the sensing reflector 1.1,1.2 to 1.i closest to the proximal end 71; wherein the coherence length of the light source 4 is set to be longer than the maximum distance between any of the sensing reflectors 1.1,1.2 to 1.i and the reference reflector 2; and wherein the light source 4 is modulated over a bandwidth of the emitted light. The bandwidth of the light is narrower than the bandwidth of the reflectors 1.1,1.2 to 1.i.

In another embodiment of the sensor system 1, instead of a light source modulable in wavelength, another suited multiplexing technique may be used. A multiplexing technique may include signal multiplexing, such as code division multiplexing, time division multiplexing or any other suitable multiplexing technique and a light source. It should be noted that in this case a light source may comprise multiple laser sources inside the light source, the laser sources coupled into one fiber outlet of the light source. A multiplexing technique is suitable as long as the different lasers of the light source can be distinguished from one another in the interferometric signal.

Explicitly included in possible embodiments of the sensor system 1, are also embodiments having a combination of aspects of embodiments described above.

## List of reference symbols

1.1 to 1.i (i>1; $i \in \mathbb{N}$)    Measuring reflector
2,2',2''      Reference reflector
21      Attenuator
22      High reflecting device, Mirror

3.1 to 3.i (i>1; $i \in \mathbb{N}$)    Measuring segment
4      Light source, laser
5      Photodetector

6      Evaluation unit
7,7',7"      Fiber
71,71' ,71"      Proximal end
72,72' ,72"      Distal end
8      Sensing region Coupling device, 3-port optical
9,9',9"      circulator


**Claims**

1. Sensor system (1); comprising at least one optical fiber (7), a modulable light source (4), and a photodetector (5); at least one optical fiber (7) comprises at least two sensing reflectors (1.1, 1.2 to 1.i); and at least one optical fiber (7) comprises at least one reference reflector (2); each of the at least one optical fiber (7) further comprises a distal end (72) and a proximal end (71); wherein a measuring segment (3.1 to 3.i) is formed in between two sensing reflectors (1.1 to 1.i); wherein the measuring segment (3.1 to 3.i) is arranged between the distal end (72) and the proximal end (71); wherein the light source (4) is arranged at the proximal end (71) of the optical fiber (7); **characterized in that** that the reference reflector (2) is disposed between the proximal end (71) and the distal end (72); and **in that** the reference reflector is least 1 mm spaced apart from the distal end (72).

2. Sensor system (1) according to claim 1, **further characterized in that** that the reference reflector (2) is disposed between the proximal end (71) and the sensing reflector (1.1) closest to the distal end (72); or **in that** preferred the reference reflector (2) is disposed between the proximal end (7.1) and the sensing reflector (1.1) closest to the proximal end (71).

3. Sensor system (1) according any of claims 1 to 2, **further characterized in that** the reference reflector (2) is a fiber Bragg grating; or that the sensing reflectors (1.1, 1.2 to 1.i) are Fiber Bragg gratings and the reference reflector (2) is a fiber Bragg grating.

4. Sensor system according to any of claims 1 to 3, **further characterized in that** an attenuator (21) is arranged at the distal end (72) of the fiber (7); or **in that** that the photodetector (5) is arranged at the distal end (72) of the fiber (7).

5. Sensor system according to claim 4, **further characterized in that in that** the measuring segments (3.1 to 3.i) are arranged in a sensing region (8); and that the measuring segments (3.1 to 3.i) configured to change its properties depending on a physical property within the sensing region (8), for example temperature, pressure, or strain; and that the attenuator (21) is arranged in the sensing region (8).

6. Sensor system according to any of claims 4 or 5, **further characterized in that** the attenuator is configured to attenuate incident light by at least -0.1 dB/mm (decibel per millimeter, preferably more than -2 dB/mm; or that the attenuator has a length of no more than 100 mm, preferably no more than 20 mm.

7. Sensor system according to any of claims 1 to 6, **further characterized in that** the light source (4) has a modulable wavelength; that the light source (4) is configured to emit light modulated at a modulation rate; and that the light source (4) is configured to emit light with a coherence length longer than the maximum distance between any of the sensing reflectors (1.1, 1.2 to 1.i) and the closest of the at least one reference reflector (2).

8. Sensor system (1) according to claim 3, **further characterized in that** the bandwidth of the sensing reflectors (1.1,1.2 to 1.i) is at least 1 nm at about 1550 nm wavelength; and that the light source (4) configured to emit light having a linewidth less than 10 GHz, preferably less than 2 MHz.

9. Sensor system (1) according to any of claims 1 to 7, **further characterized in that** the reflectivity of the reference reflector (2) is at least twice, preferred five times, the reflectivity of any sensing reflector (1.1,1.2 to 1.i); or that the reflectivity of the reference reflector (2) is at least half, preferred one-fifth, the reflectivity of any sensing reflector (1.1,1.2 to 1.i).

10. Sensor system (1) according to any of claims 1 to 8, **further characterized in that** the modulation rate of the light source (4) is at least 10 Hz, preferably at least 200 kHz; that the light source (4) is a Distributed Feedback diode; and that the photodetector (5) comprises exactly one single photosensitive element.

11. Sensor system (1) according to any of claims 1 to 10, **further characterized in that** the sensor system (1) comprises an evaluation unit (6); and that the evaluation unit (6) is configured to track the relative phase of resonances in time upon modulation of the light of the light source(4).

12. An optical sensing method, comprising the steps of

    - providing at least an optical fiber (7); at least one optical fiber (7) comprising at least two sensing reflectors (1.1,1.2) and at least one optical fiber (7) comprising at least a reference reflector (2);
    - providing a modulable light source (4); and
    - providing a photodetector (5);

    wherein the light source (4) emits light into a proximal end (71) of the fiber (7); wherein the wavelength of the light is modulated over a bandwidth of the light as a function of time, wherein the light is reflected by at least two sensing reflectors (1.1,1.2 to 1.i) forming a measuring segment (3.1 to 3.i) of the optical fiber (7), which sensing reflectors (1.1,1.2 to 1.i) are arranged between the distal end (72) and the proximal end (71) of the fiber (7); wherein the light is also reflected at a reference reflector (2) arranged between the proximal end (71) and the distal end (72) and arranged at least 1 mm from the distal end (72); wherein the coherence length of the light source (4) is set to be longer than the maximum distance between any of the sensing reflectors (1.1,1.2 to 1.i) and the reference reflector (2); and wherein the light source (4) is modulated over a bandwidth of the emitted light; and that the bandwidth of the light is narrower than the bandwidth of the reflectivity of the reflectors (1.1,1.2 to 1.i,2).

13. The optical sensing method, according to claim 11, further comprising the steps of

    - providing an evaluation unit (6);

wherein the evaluation unit (6) tracks the relative phase of resonances in time upon modulation of the light of the light source (4); and wherein from the reflected light signal a time-resolved interferogram containing characteristic resonant peaks in amplitude is formed, corresponding to the length between the reference reflector and a respective sensing reflector.

14. The optical sensing method, according to any of claims 11 or claim 12; wherein the photodetector (5) comprises exactly one single photosensitive element.

15. The optical sensing method, according to any of claims 11 to claim 13; wherein the reference reflector (2) is disposed between the proximal end (71) and the distal end (72); and the reference reflector is least 1 mm spaced apart from the distal end (72); or in that the reference reflector (2) is disposed between the proximal end (71) and the sensing reflector (1.1) closest to the distal end (72) and the reference reflector is least 1 mm spaced apart from the distal end (72); or in that the reference reflector (2) is disposed between the proximal end (7.1) and the sensing reflector (1.1) closest to the proximal end (71) and the reference reflector is least 1 mm spaced apart from the distal end (72).

Fig. 1

PRIOR ART

Fig. 2

Fig. 3

Fig. 4

Fig. 7

Fig. 8

Fig. 5

Fig. 6

Europäisches
Patentamt

European
Patent Office

Office européen
des brevets

# EUROPEAN SEARCH REPORT

Application Number

EP 24 18 7066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/110621 A1 (DUNCAN ROGER G [US] ET AL) 12 May 2011 (2011-05-12) <br> * paragraph [0026] - paragraph [0036]; figures 2-7 * | 1-15 | INV.<br>G01D5/353 |
| X | US 2013/021615 A1 (DUNCAN ROGER [US] ET AL) 24 January 2013 (2013-01-24) <br> * paragraph [0011] - paragraph [0034]; figures 1-4 * | 1,7,11,<br>12 | |
| A | US 2017/219390 A1 (MORIMOTO YOSHITAKA [JP] ET AL) 3 August 2017 (2017-08-03) <br> * the whole document * | 1-15 | |

TECHNICAL FIELDS
SEARCHED        (IPC)

G01D

The present search report has been drawn up for all claims

| Place of search | Date of completion of the search | Examiner |
|---|---|---|
| Munich | 11 December 2024 | Lyons, Christopher |

EPO FORM 1503 03.82 (P04C01)

## ANNEX TO THE EUROPEAN SEARCH REPORT
## ON EUROPEAN PATENT APPLICATION NO.

EP 24 18 7066

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2024

| Patent document cited in search report | Publication date | Patent family member(s) | | Publication date |
|---|---|---|---|---|
| US 2011110621 A1 | 12-05-2011 | AU | 2010319601 A1 | 24-05-2012 |
| | | BR | 112012011121 A2 | 05-07-2016 |
| | | CA | 2780435 A1 | 19-05-2011 |
| | | GB | 2487333 A | 18-07-2012 |
| | | MY | 158827 A | 15-11-2016 |
| | | NO | 343621 B1 | 15-04-2019 |
| | | US | 2011110621 A1 | 12-05-2011 |
| | | WO | 2011060055 A2 | 19-05-2011 |
| US 2013021615 A1 | 24-01-2013 | AU | 2012284535 A1 | 12-12-2013 |
| | | BR | 112014000801 A2 | 14-02-2017 |
| | | CA | 2839871 A1 | 24-01-2013 |
| | | GB | 2507904 A | 14-05-2014 |
| | | MY | 172743 A | 11-12-2019 |
| | | US | 2013021615 A1 | 24-01-2013 |
| | | WO | 2013012495 A2 | 24-01-2013 |
| US 2017219390 A1 | 03-08-2017 | JP | 6062104 B2 | 18-01-2017 |
| | | JP | WO2015129028 A1 | 30-03-2017 |
| | | US | 2017219390 A1 | 03-08-2017 |
| | | WO | 2015129028 A1 | 03-09-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2568305 A1

- GB 2571575 A1

**Non-patent literature cited in the description**

- Range-resolved optical interferometric signal processing. **KISSINGER, THOMAS**. thesis. Cranfield University

- **THOMAS KISSINGER** ; **RICARDO CORREIA** ; **THOMAS O. H. CHARRETT** ; **STEPHEN W. JAMES** ; **RALPH P. TATAM**. Fiber Segment Interferometry for Dynamic Strain Measurements. *J. Lightwave Technol.*, 2016, vol. 34, 4620-4626